# EUROPÄISCHE PATENTSCHRIFT

(11) **EP 2 397 657 B1**
(45) Veröffentlichungstag und Bekanntmachung des Hinweises auf die Patenterteilung: **16.08.2017**
(21) Anmeldenummer: 11168117.7
(22) Anmeldetag: 30.05.2011
(51) Int. Cl.: F01D 21/00, F01D 25/16, F02C 7/06, F16C 23/02

(54) **Verfahren zur Kontrolle der Lagerausrichtung in einer Gas- oder Dampfturbine sowie Gas- oder Dampfturbine**
Method for checking bearing alignment in a gas or steam turbine and gas or steam turbine
Procédé pour le contrôle d'alignement d'un palier dans une turbine à gaz ou à vapeur et une telle turbine à gaz ou à vapeur

(30) Priorität: 17.06.2010 CH 9722010
(43) Veröffentlichungstag der Anmeldung: 21.12.2011
(73) Patentinhaber: Ansaldo Energia IP UK Limited, London W1G 9DQ (GB)
(72) Erfinder: Brühwiler, Eduard, 5300 Turgi (CH); Rauch, Marc, 8105 Regensdorf (CH)
(74) Vertreter: Bernotti, Andrea

(56) Entgegenhaltungen:
- DE-U1-202008 010 643
- GB-A- 344 669
- JP-A- 8 178 609
- JP-A- 10 332 305
- US-A- 3 447 244
- US-A1- 2006 217 933
- US-A1- 2007 258 669

## Beschreibung

### TECHNISCHES GEBIET

Die Erfindung betrifft ein Verfahren zur Kontrolle der Lagerausrichtung eines Rotors einer Gasturbine oder Dampfturbine. Zudem betrifft sie eine spezifische Ausgestaltung einer Dampfturbine respektive Gasturbine, so dass ein derartiges Verfahren durchgeführt werden kann, und sie betrifft eine Vorrichtung zur Durchführung eines derartigen Verfahrens.

### STAND DER TECHNIK

Die Lagerung von grossen Turbomaschinen (Journal Bearing) besteht im Wesentlichen aus Lagergehäuse und Lagerschale, deren Innenseite die Berührungsstelle zwischen rotierendem und stehendem Teil ist.

Um die Funktion der hydrodynamischen Lagerung im Betrieb sicherzustellen und um die Reibung im so genannten Rotor-Barring (langsames Drehen im Abkühlbetrieb) auf einem Minimum zu halten, müssen Lagerschale und die Lagerpartie des Rotors genau parallel zueinander ausgerichtet sein.

Das gegenseitige Ausrichten ist durch Messungen während der Montage bei offenem Lager- und Turbinengehäuse relativ einfach zu realisieren. Werden aber Lager- und Turbinengehäuse geschlossen und verschraubt, kann sich die Biegelinie des Turbinengehäuses verändern. Dadurch verdrehen sich Lagergehäuse und Lagerschale zum Rotor und beide sind zueinander nicht mehr parallel. Damit sind die optimalen Funktionsbedingungen nicht mehr erfüllt.

Um sicherzustellen, dass die Lagerschale zum Rotor richtig ausgerichtet ist, werden vor und nach dem Schliessen von Lagerdeckel und Turbinengehäuse die Lagen zueinander gemessen. Dies wird bis anhin mittels vier Messstellen bei 12Uhr Position getan, wobei die Messung in radialer Richtung erfolgt.

Bei geschlossener Maschine besteht zu solchen Messstellen kein Zugang mehr. Eine Aussage über eine möglicherweise vorhandene Fehlpositionierung ist entsprechend, wenn überhaupt, nur sehr ungenau möglich. Hinzu kommt, dass die Messung auf eine relativ raue (Aussenwand der Lagerschale) und konvexe Fläche (Lagerschale, Rotor) ungenau ist. Die Erfahrungen haben gezeigt, dass derartige Messungen nicht genügend zuverlässig sind. Die US2006/217933 beschreibt die Messung einer Falschausrichtung einer Achse einer Turbomaschine, bei der der Abstand zwischen einem Flansch und einer Referenzfläche des Rotors als Mass für die Falschausrichtung gemessen wird.

Aus der GB 344669 ist eine Vorrichtung zur Messung der Exzentrizität eines rotierenden Körpers, z.B. einer Dampfturbinenwelle bekannt. Sie umfasst eine Anzeigevorrichtung mit einem auf der Welle montierten Exzentrizitätsindikator und einem Zwischenteil, das mit dem Exzentrizitätsindikator in Anschlag gebracht werden kann.

### DARSTELLUNG DER ERFINDUNG

Es ist entsprechend Aufgabe der vorliegenden Erfindung, ein einfacher durchführbares und präziseres Verfahren zur Kontrolle der Lagerausrichtung eines Rotors einer Gasturbine oder Dampfturbine zur Verfügung zu stellen. Zudem ist es Aufgabe der Erfindung, eine entsprechend für die Durchführung dieses Verfahrens ausgebildete Gasturbine respektive Dampfturbine zur Verfügung zu stellen sowie eine Vorrichtung zur Durchführung des Verfahrens.

Konkret ist das Verfahren vorgesehen für eine Gasturbine oder Dampfturbine mit einem Rotor mit einem radialen Versatz und einer radialen Versatzfläche und mit einer den Rotor lagernden Lagerschale mit einer wenigstens bereichsweise radialen Abschlussfläche. Dabei sind diese beiden Flächen typischerweise senkrecht zur Achse des Rotors ausgerichtet, und die radiale Versatzfläche und die radiale Abschlussfläche sind üblicherweise beide einem freien Ende des Rotors zugewandt. An diesem freien Ende des Rotors können selbstverständlich weitere Elemente vorgesehen sein. Der radiale Versatz ist dabei bei der Lagerschale angeordnet und typischerweise zum freien Ende des Rotors (um z. B. 2-40 cm) hin versetzt.

Nach der Erfindung wird nun das das Versatzmass in axialer Richtung zwischen radialer Versatzfläche und radialer Abschlussfläche bezüglich Rotor an wenigstens zwei unterschiedlichen Umfangspositionen um den Rotorumfang ausgemessen, um die Lagerausrichtung des Rotors zu bestimmen, wobei Unterschiede im Versatzmass an unterschiedlichen Umfangspositionen als Maß für die Lagerausrichtung verwendet werden. Mit dem vorgeschlagenen Verfahren erfolgt die Messung also direkt an einer Stirnfläche des Rotors beziehungsweise der Lagerschale. Hierbei sind nur noch zwei anstelle von vier Messstellen notwendig. Die Messung ist genauer, da sie direkt zwischen Rotor und Lagerschale erfolgt (ebene, bearbeitete Flächen). Die Messstellen sind bei geschlossener Maschine gut zugänglich. Es kann ein entsprechender Messstab eingesetzt werden.

Für die Messung werden typischerweise zwei axiale Messbohrungen an einer oberen und unteren Position benötigt. Zum Beispiel mittels Messstab mit einem Schlitten, Träger, Handgriff und Schiebegriff wird das Nennmass (Versatzmass) ermittelt. Die zwei Masse an der oberen und unteren Position geben Rückschlüsse über die Parallelität der Lagerschale gegenüber dem Rotor (weil Rotorkante/Versatzfläche wie Lagerschale-Stirnseite/radiale Abschlussfläche genau rechtwinklig zu den Lagerflächen sind). Im Idealfall müssen beide Masse an der oberen und unteren Position identisch sein. Entsprechend werden vorzugsweise anschließend die notwendigen Manipulationen an der gesamten Anlage vorgenommen, um sicherzustellen, dass die beiden Maße an der oberen oder unteren Position (oder an anderen respektive weiteren Positionen) identisch sind. Eine solche Korrektur kann unter Verwendung des Verfahrens in zwei oder mehreren Schritten (messen-anpassen-messen-anpassen etc.) durchgeführt werden.

Im Gegensatz zu den Verfahren nach dem Stand der Technik, bei welchen die relative Lage von Lagerschale und Rotor in einer radialen Richtung ermittelt werden und damit insbesondere beim Rotor ein Abstand zu einer konkaven Fläche ausgemessen wird, was üblicherweise ungenau ist, schlägt nun die vorliegende Erfindung die Messung in axialer Richtung vor, wobei zwei Flächen verwendet werden, welche wenigstens in jenem Abschnitt, in welchem die Messung durchgeführt wird, als im wesentlichen parallele und senkrecht zur Rotorachse ausgerichtete Ebenen ausgebildet sind, was eine wesentlich genauere Bestimmung der Relativposition von Lagerschale und Rotor erlaubt.

Gemäß einer ersten bevorzugten Ausführungsform des vorgeschlagenen Verfahrens wird dabei so vorgegangen, dass eine erste Umfangsposition der Messung des Versatzmasses in einer oberen Position, vorzugsweise in einem Winkelbereich von +/- 30° um die 12 Uhr Position (betrachtet in axialer Richtung bezüglich Rotor) gewählt ist, und eine zweite Umfangsposition der Messung des Versatzmasses in einer unteren Position, vorzugsweise in einem Winkelbereich von +/- 30° um die 6 Uhr Position gewählt ist. Da üblicherweise die Ausrichtungsprobleme dadurch zustande kommen, dass die Lagerschale bezüglich Rotor vor allem in der horizontalen Längsachse (entspricht der Rotorachse) abweichen können, führen diese beiden Positionen zu einer optimalen Messempfindlichkeit. Aus praktischen Gründen wird dabei üblicherweise die entsprechende Messstelle, in Form einer spezifisch vorgesehenen Bohrung ausgebildet oder aber auch einfach eine Flanschbohrung, aus welcher die entsprechende Verschraubung entfernt wurde, nicht exakt bei 12 Uhr respektive 6 Uhr gewählt, da bei diesen Positionen häufig andere konstruktive Elemente wie beispielsweise Befestigungselemente, Lüftungskanäle etc. angeordnet sind.

Generell wird bevorzugtermassen so vorgegangen, dass die beiden unterschiedlichen Umfangspositionen für die Messung des Versatzmasses im wesentlichen gegenüberliegend, vorzugsweise genau gegenüberliegend um den Umfang des Rotors betrachtet angeordnet sind.

Grundsätzlich ist es möglich, an zwei verschiedenen, wie oben erwähnt bevorzugtermassen gegenüberliegenden Umfangspositionen die Messung vorzunehmen. Um aber sicherzustellen, dass sämtliche möglichen Verdrehungen von Lagerschale zu Rotor auch empfindlich ausgemessen werden können, können auch drei oder vier (oder sogar mehr) unterschiedliche Umfangspositionen für die Messung der Versatzmasse eingesetzt werden. So ist es beispielsweise möglich, bei ungefähr den 12, 3, 6, und 9 Uhr Positionen auszumessen.

Typischerweise ist bei einer derartigen Gasturbine respektive Dampfturbine die Lagerschale in einem Hohlraum eines Lagergehäuses angeordnet. Die Messung erfolgt dabei durch an unterschiedlichen Umfangspositionen vorgesehene axiale Bohrungen in einer an der Stelle der Bohrung im wesentlichen radialen (das heißt senkrecht zur Achse des Rotors ausgerichteten), normalerweise dem freien Ende des Rotors zugewandten Wandung des Lagergehäuses.

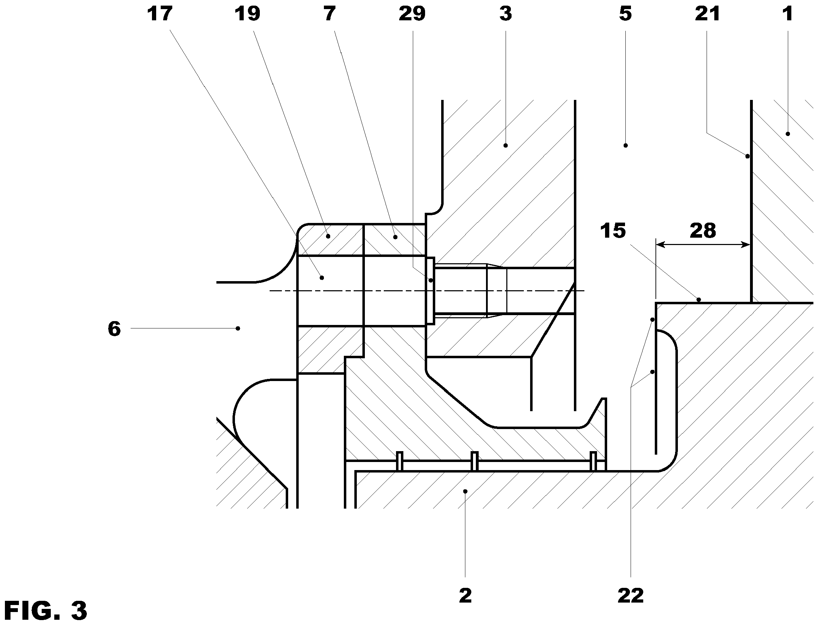

Weiterhin ist auch eine direkte Messung mit Tiefenmass möglich, wobei dann eine entsprechende Auflagefläche ausserhalb des Anschlussflansches (siehe Anschlussflansch 19 in Fig. 3) gemacht werden muss.

Grundsätzlich kann das Versatzmass durch diese Bohrungen unter Verwendung von unterschiedlichen Vorrichtungen ermittelt werden. So ist beispielsweise der Einsatz von optischen Messvorrichtungen möglich, welche sequenziell oder parallel mit zwei Messstrahlen (zum Beispiel Laser) die beiden Flächen respektive deren relativen axialen Abstand ermitteln. Eine solche Vorrichtung kann nach Öffnung der Bohrung beispielsweise auf die Bohrung aufgesetzt werden oder teilweise mit einer Manschette in die Bohrung eingeführt werden.

Alternativ ist es möglich, die Messung des Versatzmasses unter Verwendung einer mechanischen Messvorrichtung vorzunehmen. So beispielsweise unter Verwendung einer stabförmigen Vorrichtung, welche wenigstens über ein erstes Element verfügt, welches in axialen Anschlag mit der Versatzfläche gebracht wird, sowie wenigstens über ein zweites Element, welches bezüglich des ersten Elementes verschieblich gelagert ist, und welches in axialen Anschlag mit der radialen Abschlussfläche gebracht wird. Das Versatzmass kann dann entweder bei in das Lagergehäuse eingeführten Elementen an den aus dem Lagergehäuse hinausragenden gegenüberliegenden Enden ermittelt werden (Ermittlung des Maßes bei eingeführter Vorrichtung), über den Versatz des ersten Elementes zum zweiten Element, oder aber die Vorrichtung kann aus dem Lagergehäuse entnommen werden, wobei darauf geachtet werden muss, dass sich die beiden Elemente relativ zueinander nicht verschieben, und das Versatzmass kann an der Spitze der Elemente, dort wo der Kontakt zu den Flächen hergestellt worden war, über den Versatz des ersten Elementes zum zweiten Element bestimmt werden. Zur Vereinfachung können dabei an den entsprechenden Bereichen Skalen an den Elementen oder an diesen tragenden weiteren Bauteilen vorgesehen sein.

Die Lagerschale ist bei derartigen Gasturbinen respektive Dampfturbinen, wie oben bereits erläutert, typischerweise in einem Hohlraum eines Lagergehäuses angeordnet, und die Messung kann dann durch an unterschiedlichen Umfangspositionen vorgesehene Bohrungen in einer radialen, dem freien Ende des Rotors zugewandten Wandung vorgenommen werden, indem das erste Element und das zweite Element mit jeweils einem ersten Ende in axialer Richtung jeweils in eine Bohrung eingeführt wird, das erste Element in Anschlag mit der Versatzfläche gebracht wird und das zweite Element in Anschlag mit der radialen Abschlussfläche gebracht wird, gegebenenfalls die Relativposition des ersten Elementes zum zweiten Element fixiert wird, zum Beispiel unter Verwendung einer bei dieser Messposition außerhalb des Lagergehäuses angeordneten Schraube, und diese Relativposition als Maß für das Versatzmass verwendet wird.

Die Messung des Versatzmasses sollte bevorzugtermassen an einer Stelle erfolgen, die möglichst nahe an der Umfangsfläche des Rotors ist, welche in der Lagerschale läuft. Entsprechend erfolgt bevorzugtermassen die Messung des Versatzmasses bei einer radialen Position weniger als 10 mm, vorzugsweise weniger als 5 mm radial außerhalb einer Umfangsfläche des Rotors im Lagerbereich hinsichtlich radialer Abschlussfläche und mit entsprechenden Maßen nach innen hinsichtlich Versatzfläche. Vorzugsweise wird so vorgegangen, dass die Messung des Versatzmasses erfolgt, indem die axiale Position der radialen Versatzfläche, welche direkt an die Umfangsfläche des Rotors im Lagerbereich angrenzt, an einer Position ausgemessen wird, welche weniger als 10 Millimeter, vorzugsweise weniger als 5 mm bezüglich Radius der Umfangsfläche des Rotors nach innen versetzt ist, und die radiale Abschlussfläche entsprechend möglichst wenig nach innen versetzt gemessen wird. Typischerweise wird dies erreicht, indem eine Vorrichtung wie oben erwähnt mit einem ersten und zweiten Element eingesetzt wird, indem das erste Element auf oder in dem zweiten Element verschieblich gelagert ist, und indem das stabförmige zweite Element im wesentlichen so geführt wird, dass es bei der Messung mit einer Fläche in Kontakt oder sehr nahe zur Umfangsfläche des Rotors zu liegen kommt. Bevorzugtermassen weist die Turbine einen in wenigstens einer Lagerschale gelagerten Rotor auf, wobei die Lagerschale in einem Hohlraum eines Lagergehäuses angeordnet ist, und wobei an unterschiedlichen Umfangspositionen zu öffnende Durchgangsbohrungen für die Messung in einer radialen, dem freien Ende des Rotors zugewandten Wandung des Lagergehäuses vorgesehen sind.

Des weiteren betrifft die vorliegende Erfindung eine Messvorrichtung für die Durchführung eines Verfahrens, wie es oben geschildert wurde, insbesondere bei einer Gasturbine oder Dampfturbine wie sie weiter oben beschrieben wird. Die Vorrichtung ist dabei vorzugsweise dadurch gekennzeichnet, dass sie wenigstens über ein erstes stabförmiges Element verfügt, dessen erstes Ende in axialen Anschlag mit der Versatzfläche gebracht werden kann. Zudem verfügt sie über wenigstens ein zweites stabförmiges Element, welches bezüglich des ersten Elementes verschieblich gelagert ist (beispielsweise in oder am ersten Element gelagert - zum Beispiel in Form einer Gleitschiene - es ist aber auch möglich, eine mittelbare Lagerung über ein drittes Bauteil zu ermöglichen), und dessen erstes Ende in axialen Anschlag mit der radialen Abschlussfläche gebracht werden kann. Dabei kann das Versatzmass über den verschiebungsmäßigen Versatz des ersten Elementes zum zweiten Element ermittelt werden. Zur Erleichterung der Ermittlung des Versatzmasses sind entsprechend vorzugsweise Mittel vorgesehen, die Relativposition des ersten Elementes zum zweiten Element, vorzugsweise in Form einer bei der Messposition außerhalb des Lagergehäuses angeordneten Schraube (beispielsweise eine Rändelschraube), welche diese Relativposition festlegt. Weiterhin ist vorzugsweise an wenigstens einer beim Messvorgang (das heißt bei in die Bohrung eingeführten Elementen) außerhalb des Lagergehäuses angeordneten Position auf dem ersten Element und/oder dem zweiten Element und/oder einem diese Elemente tragenden weiteren Tragelement eine Skala vorgesehen ist, über welche die Relativposition der Elemente abgelesen werden kann. Ebenfalls ist es möglich, eine derartige Skala an den in Kontakt mit den Versatzflächen kommenden Enden der Elemente vorzusehen, eine solche Skala kann dann aber nur abgelesen werden, wenn die Vorrichtung wieder aus dem Lagergehäuse entnommen wurde.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: einen axialen Schnitt durch den Lagerungsbereich des Rotors einer Gasturbine;
- Fig. 2: in a) eine Aufsicht in axialer Richtung gegen das Rotorende auf die Abdeckung des Lagergehäuses und in b) einen axialen Schnitt durch den Lagerungsbereich einer Gasturbine mit eingeschobener Messvorrichtung;
- Fig. 3: in einer Detailansicht einen axialen Schnitt im Bereich der Durchtrittsöffnung für die Messvorrichtung;
- Fig. 4: eine perspektivische Ansicht gegen das Rotorende auf die Abdeckung des Lagergehäuses mit einer in der oberen Öffnung und einer in der unteren Öffnung eingeführten Messvorrichtung; und
- Fig. 5: eine perspektivische Ansicht auf eine Messvorrichtung.

### BESCHREIBUNG BEVORZUGTER AUSFÜHRUNGSFORMEN

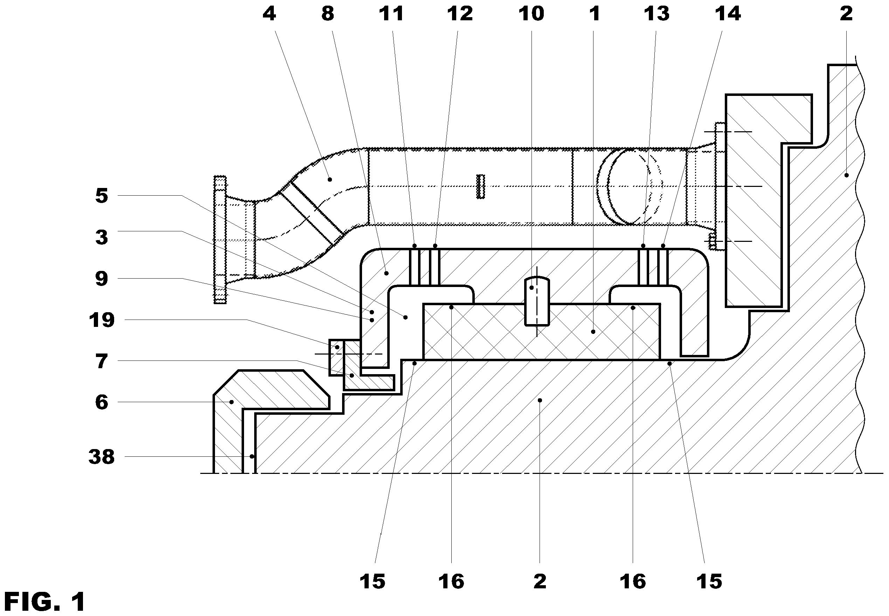

Figur 1 zeigt einen axialen Schnitt durch den Lagerungsbereich des Rotors einer Gasturbine. Der Rotor 2 verfügt dabei im Lagerungsbereich über einen zylindrischen Bereich, dessen Umfangsfläche 15 gegen das freie Ende 38 hin sukzessive abgestuft ist. In diesem Bereich ist die Umfangsfläche 15 in einem Lagergehäuse 3 angeordnet. In diesem Lagergehäuse 3 gibt es einen Hohlraum 5, in welchem die eigentliche Lagerschale 1 über Befestigungselemente 10 befestigt ist. Die Lagerschale 1 verfügt über eine zentrale zylindrische Ausnehmung, in welcher der Rotor 2, typischerweise über Gleitlager, drehbar gelagert ist. Dabei dreht sich die Rotor 2 auf einem Ölfilm in der Lagerschale. Im Hohlraum 5 ist üblicherweise ein Ölnebel, und zum freien Ende hin schliesst das Lagergehäuse über eine radiale Wandung 9 ab, während es umfangsmässig über die Umfangswandung 8 abgeschlossen wird. Zum freien Ende hin wird der den Rotor umgebende Bereich durch ein Ölabstreiferelement 7 und ein Abschlusselement 6 abgeschlossen. Üblicherweise sind in diesem Bereich zudem Kühlluftleitungen 4 angeordnet sowie weitere Elemente, weshalb dieser Lagerungsbereich nur beschränkt zugänglich ist.

Wie bereits oben erläutert ist die relative Orientierung von Lagerschale 1 und Rotor 2 entscheidend für einen störungsfreien effizienten Betrieb der Turbine. Nur wenn Lagerschale 1 und Rotor 2 im Lagerungsbereich genau koaxial angeordnet sind, ist ein derartiger störungsfreier Betrieb sichergestellt. Nach dem Stand der Technik wird bei einer derartigen Lagerung entsprechend eine Überprüfung der Relativlage von Lagerschale 1 und Rotor 2 unter Zuhilfenahme von spezifisch dafür vorgesehenen Messbohrungen 11-14, die radial verlaufen und durch die Umfangswandung 8 des Lagergehäuses vorgesehen sind, durchgeführt.

Zu diesem Zweck sind eine vordere Rotormessbohrung 11 und eine vordere Lagerschalenmessbohrung 12 vorgesehen. Im rechten Bereich ist auf der anderen Seite ein hintere Lagerschalenmessbohrung 13 und eine hintere Rotormessbohrung 14 in der Umfangswandung 8 vorgesehen. Dabei ist die Rotormessbohrung 11, 14 jeweils so angeordnet, dass sie auf einen freiliegenden Bereich der Umfangsfläche 15 der Welle resp. des Rotors fluchtet, während jeweils die Lagerschalenmessbohrung 12, 13 so angeordnet ist, dass sie auf einen freiliegenden Bereich der radialen Aussenseite 16 der Lagerschale 1 fluchtet.

Zur Ausmessung der Relativposition von Rotor 2 und Lagerschale 1 wird hier dann so vorgegangen, dass unter Zuhilfenahme von in die Messbohrungen 11-14 eingeschobenen Messstäben sowohl vorne wie auch hinten der Versatz zwischen den Flächen 15 und 16 ausgemessen wird. Wenn Rotor 2 und Lagerschale genau koaxial angeordnet sind, dann ist der Versatz sowohl vorne, gemessen über die Bohrungen 11 und 12, als auch hinten, gemessen über die Bohrungen 13 und 14, gleich. Problematisch an diesem Verfahren resp. an der Messung unter Zuhilfenahme solcher Bohrungen 11-14 ist die Tatsache, dass insbesondere die Bohrungen 13 und 14 nicht zugänglich sind, ohne dass Teile der Gasturbine demontiert werden müssen. Zudem ist problematisch, dass sowohl die radiale Aussenseite 16 als auch auf jeden Fall die Umfangsfläche 15, konvexe Flächen sind, und entsprechend die Messung mit einem Anschlagspunkt auf einer derartigen konvexen Fläche nur vergleichsweise ungenau möglich ist.

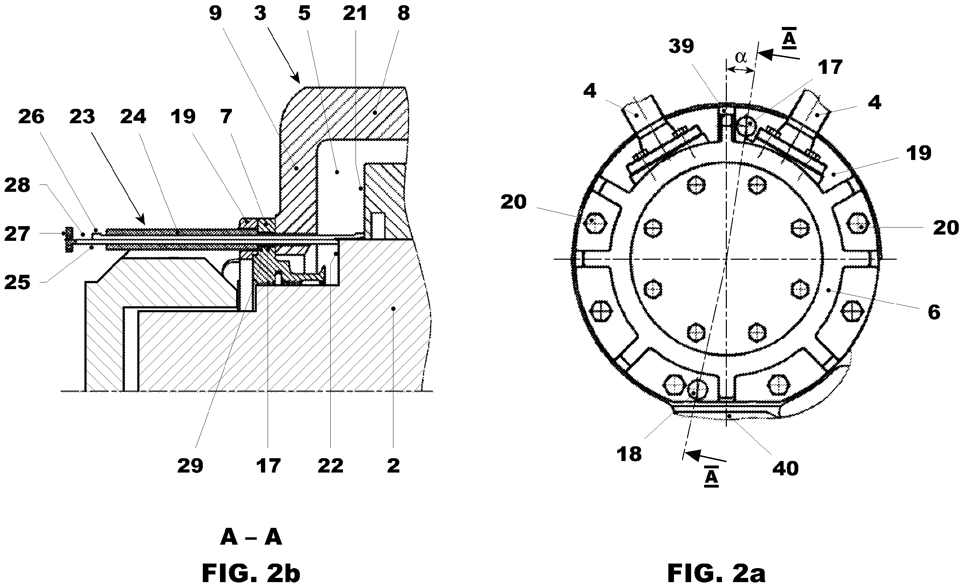

Unter Zuhilfenahme der Figuren 2-4 soll nun gezeigt werden, wie das Messverfahren entsprechend der Erfindung wesentlich verbessert werden kann. Gleiche Bezugszeichen in diesen Figuren bezeichnen generell gleiche oder wenigstens funktionsidentische Elemente. Die Messung erfolgt hier nun nicht mehr in radialer Richtung, sondern vielmehr in axialer Richtung. Zudem wird nicht die Umfangsfläche 15 relativ zur doch recht weit davon entfernten radialen Aussenseite 16 ausgemessen, sondern vielmehr ganz nahe an der entscheidenden Stelle gemessen.

Konkret ist es so, dass der Rotor 2 unmittelbar neben einer radialen Abschlussfläche 21 der Lagerschale über eine radiale Verjüngung, d.h. einen radialen Versatz 22 verfügt. An dieser Stelle gibt es entsprechend eine radial verlaufende, d.h. senkrecht zur Achse des Rotors angeordnete Versatzfläche 22. Auch die radiale Abschlussfläche 21 ist senkrecht zur Achse des Rotors angeordnet.

Der Versatz zwischen der Versatzfläche 22 und der Abschlussfläche 21, wenn an einer oberen Position gemessen und anschliessend an einer unteren Position gemessen, miteinander verglichen wird, ist dies ein Mass für die Präzision der relativen Ausrichtung von Rotor 2 zur Lagerschale 1. Um eine derartige Messung in axialer Richtung zu ermöglichen, ist im Abschlusselement 6, wie dies insbesondere in Figur 2a) gesehen werden kann, eine obere axiale Messbohrung 17 im Anschlussflansch 19 vorgesehen, und eine untere axiale Messbohrung 18. Die obere axiale Messbohrung 17 ist dabei möglichst nahe bei der 12 Uhr Position 39 angeordnet, und die untere axiale Messbohrung 18 liegt genau gegenüber und damit ihrerseits nahe bei der 6 Uhr Position 40. Der Versatzwinkel α wird dabei möglichst klein gewählt oder sogar 0, hier ist er verschieden von 0, weil exakt an der 12 Uhr Position 39 und bei der 6 Uhr Position 40 Verstrebungselemente angeordnet sind.

In Figur 2b ist dargestellt, wie durch die obere axiale Messbohrung 17 eine Messvorrichtung 23 zur Messung des Versatzes 28 zwischen der radialen Abschlussfläche 21 und der radialen Versatzfläche 22 eingeschoben ist. Die Vorrichtung verfügt dabei über eine Hülse 24, welche in den Bereich der Bohrung 17 eingeschoben ist, der durch den Flansch 19 läuft. Die Hülse 24 kommt in Anschlag mit jenem Abschnitt der Bohrung 17, der durch den Ölabstreifer 7 verläuft. Wie dies insbesondere anhand von Figur 3 erkannt werden kann, verfügt nämlich an dieser Stelle die Bohrung 17 über eine Verjüngung, die als Anschlag 29 für die Hülse 24 dient. Damit ist die Messvorrichtung in axialer Richtung und in einer definierten Position fixiert.

In dieser Hülse 24 sind nun zwei relativ zueinander und relativ zur Hülse 24 verschieblich gelagerte Elemente angeordnet. Ein äusseres oder hier oberes Element in Form eines Messstabes 26 für die Lagergehäuseposition, konkret für die Ermittlung des Anschlages an die radiale Abschlussfläche 21 der Lagerschale 1. Radial weiter innen resp. hier unterhalb und direkt daran angrenzend ist ein weiterer Messstab 25 angeordnet für die Ermittlung der Rotorposition. Das in den Hohlraum 5 hineinragende Ende dieses zweiten Messstabes 25 kommt in Anschlag mit dem radialen Versatz 22.

Sind nun die beiden Elemente 25 und 26 in Anschlag gebracht worden mit den Flächen 22 resp. 21, wie dies in Figur 2b dargestellt ist, so lässt sich bei entsprechender Längengestaltung der beiden Stäbe 25 und 26 das Versatzmass in axialer Richtung zwischen den beiden Flächen 22 und 21 ausserhalb des Lagergehäuses 3 ablesen, und zwar zwischen einem Griff 27, der am anderen Ende des Messstabes 25 vorgesehen ist, und dem ebenfalls aus dem Lagergehäuse 3 herausragenden anderen Ende des Messstabs 26 für die Lagerschalenposition. Das Versatzmass 28 kann also, insbesondere wenn auf der Oberseite des Messstabs 25 auch eine Skala vorgesehen ist, direkt bei eingeführter Messvorrichtung ausserhalb des Lagergehäuses abgelesen und damit ermittelt werden. Dadurch dass die beiden Messstäbe 25 und 26 direkt aneinander gleiten und aneinander grenzend angeordnet sind, gegebenenfalls sogar in Form von Gleitschienen ineinander gelagert sind, kommt die Unterseite (resp. radial innere Seite) des Messstabes 26 im wesentlichen in Anschlag mit der Umfangsfläche 15 und damit möglichst nahe bei dieser Umfangfläche in Anschlag mit der radialen Abschlussfläche 21. Auf der anderen Seite kommt das Ende des Messstabs 25 möglichst weit aussen in Kontakt mit dem radialen Versatz 22. So wird eine optimale Präzision der Messung des Versatzmasses 28 ermöglicht.

Die Kombination der Massstäbe 25 und 26 hat weiter den Vorteil, dass für jede Messstelle nur eine Bohrung zur Durchführung der Massstäbe 25, 26 vorgesehen werden muss. Die ineinandergleitenden Massstäbe 25 und 26 erlauben ausserdem die Verwendung von einem kleinen Loch mit einem Durchmesser weniger 25 mm, bevorzugt sogar von weniger als 10 mm.

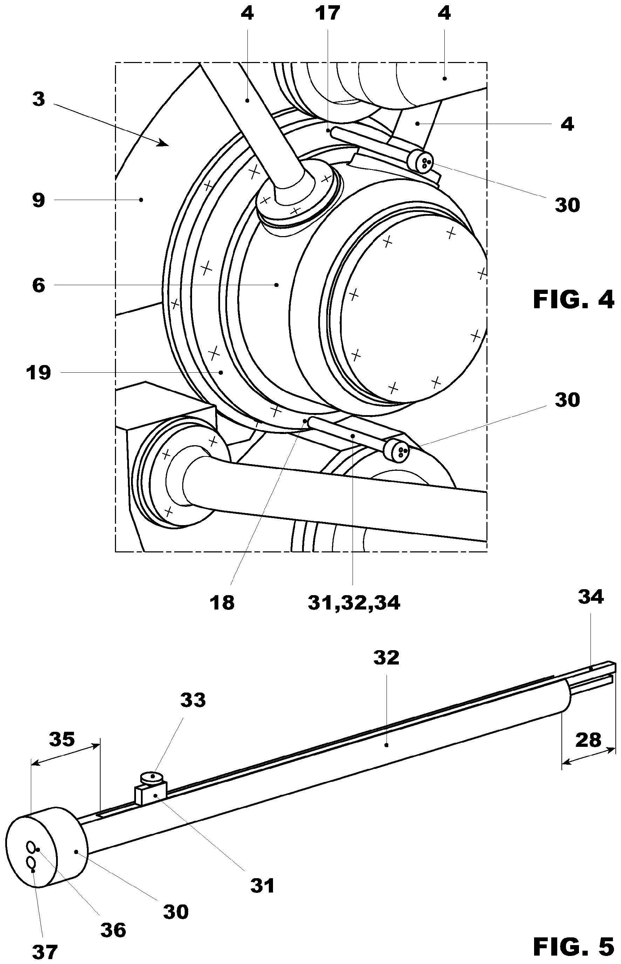

Eine etwas andere Vorrichtung zur Durchführung einer solchen Messung soll im Zusammenhang mit den Figuren 4 und 5 dargelegt werden. In den Figuren 4 und 5 ist eine derartige Messvorrichtung gemäss einem zweiten Ausführungsbeispiel in eingefügtem Zustand durch die untere Bohrung 18 resp. obere Bohrung 17 dargestellt. Die Vorrichtung umfasst in diesem Fall einen Träger 32 und einen Schlitten 34. Die Vorrichtung verfügt nicht über ein drittes Element im Sinne der oben beschriebenen Hülse 24 beim ersten Ausführungsbeispiel, denn mit dem in Figur 5 auf der rechten Seite dargestellten Ende des Trägers 32 wird direkt der Anschlag an der Fläche 22 ausgemessen, und mit dem freien Ende des Schlittens 34 die Position der Fläche 21. Der Schlitten 34 ist in Form eines T-profils ausgebildet, wobei am in Figur 5 rechts dargestellten Anschlagsende eine Nase ausgebildet ist, d. h. ein Bereich, in welchem ein Teil des Schlittens 34 als klar definierter Anschlagspunkt etwas über den Rest des Schlittens hinausragt. Der Schlitten 34 ist im im wesentlichen zylindrisch ausgebildeten Träger 32 in einer Nut verschieblich geführt. An seinem beim Messvorgang aus dem Lagergehäuse herausragenden Ende verfügt der Träger 32 über einen Handgriff 30. In diesem Handgriff 30 ist eine Befestigungsbohrung 37 für den Träger 32 vorgesehen. Zudem ist, fluchtend mit der genannten Nut, eine Messbohrung 36 vorgesehen, welche im Wesentlichen axial verläuft.

Damit der Schlitten 34 im Träger 32 in der ermittelten Verschiebungsposition, bei welcher der Träger 32 im Anschlag mit der Fläche 22 und der Schlitten 34 im Anschlag mit der Fläche 21 ist, fixiert werden kann, ist ein Schiebegriff 31 vorgesehen mit einer Rändelschraube 33. Die Rändelschraube 33 erlaubt es, den Schlitten 34 im Träger 32 zu fixieren und so die Relativposition festzulegen.

Eine solche Vorrichtung kann eingeführt werden, der Träger 32 mit seinem rechten Ende in Anschlag mit der Fläche 22 gebracht werden und der Schlitten 34 mit seinem rechten Ende in Anschlag mit der Fläche 21, wobei zur Verschiebung der Schiebegriff 31 eingesetzt werden kann, dann kann die Rändelschraube 33 festgezogen werden und die Vorrichtung wieder aus dem Lagergehäuse 3 entnommen werden. Das Versatzmass 28 kann anschliessend einfach am rechten Ende wie durch den Pfeil 28 angedeutet ausgemessen werden. Um dies zu erleichtern, ist es möglich, auf dem Schlitten 34 eine Skala vorzusehen. Es ist aber auch möglich, das Versatzmass bei eingeschobener Vorrichtung abzulesen, konkret kann bei entsprechender Ausgestaltung der Länge des Schlittens 34 das Versatzmass direkt an der mit dem Bezugszeichen 35 angegebenen Stelle ausgemessen resp. abgelesen werden. Es ist dabei entweder möglich, über eine entsprechende Skala am Träger 32 das Versatzmass direkt abzulesen, es ist aber auch möglich, durch die oben bereits erwähnte Messbohrung 36 einen Tiefen- Messstab einzuführen und das Versatzmass entsprechend durch die Bohrung 36 in der Nut, in welcher der Schlitten 34 geführt ist, zu ermitteln.

**BEZUGSZEICHENLISTE**

| | | | |
|---|---|---|---|
| 1 | Lagerschale | 22 | radialer Versatz, |
| 2 | Rotor | | Versatzfläche von 2 |
| 3 | Lagergehäuse | 23 | Messvorrichtung |
| 4 | Kühlluftleitung | 24 | Hülse |
| 5 | Hohlraum in 3 | 25 | Messstab für Rotorposition |
| 6 | Abschlusselement | 26 | Messstab für Lagerschalenposition |
| 7 | Ölabstreifer | | |
| 8 | Umfangswandung von 3 | 27 | Griff |
| 9 | radiale Wandung von 3 | 28 | Versatzmass |
| 10 | Befestigung von 1 in 3 | 29 | Anschlag für Hülse |
| 11 | vordere Rotormessbohrung | 30 | Handgriff |
| 12 | vordere Lagerschalenmessbohrung | 31 | Schiebegriff |
| | | 32 | Träger |
| 13 | hintere Lagerschalenmessbohrung | 33 | Rändelschraube |
| | | 34 | Schlitten |
| 14 | hintere Rotormessbohrung | 35 | abgebildetes Versatzmass |
| 15 | Umfangsfläche von 2 im Lagerbereich | 36 | Messbohrung in 30 |
| | | 37 | Befestigungsbohrung für Träger |
| 16 | radiale Außenseite von 1 in 5 | | |
| 17 | obere axiale Messbohrung | 38 | freies Ende des Rotors |
| 18 | untere axiale Messbohrung | 39 | 12 Uhr Position |
| 19 | Anschlussflansch von 6 | 40 | 6 Uhr Position |
| 20 | Befestigungsschraube | | |
| 21 | radiale Abschlussfläche von 1 | α | Versatzwinkel |

## Patentansprüche

1. Verfahren zur Kontrolle der Lagerausrichtung eines Rotors (2) einer Gasturbine oder Dampfturbine, **dadurch gekennzeichnet, dass**
bei einem Rotor (2) mit einem radialen Versatz und einer radialen Versatzfläche (22) und
bei einer den Rotor (2) lagernden Lagerschale (1) mit einer wenigstens bereichsweise radialen Abschlussfläche (21),
wobei die radiale Versatzfläche (22) und die radiale Abschlussfläche (21) dem freien Ende des Rotors (2) zugewandt sind und
wobei der radiale Versatz bei der Lagerschale (1) und zum freien Ende (38) des Rotors (2) hin versetzt angeordnet ist,
das Versatzmass (28) in axialer Richtung zwischen radialer Versatzfläche (22) und radialer Abschlussfläche (21) bezüglich Rotor (2) an wenigstens zwei unterschiedlichen Umfangspositionen um den Rotorumfang ausgemessen wird, um die Ausrichtung des Rotors (2) relativ zur Lagerschale (1) zu bestimmen, wobei Unterschiede im Versatzmass (28) an unterschiedlichen Umfangspositionen als Maß für die Lagerausrichtung verwendet werden.

2. Verfahren nach Anspruch 1, **dadurch gekennzeichnet, dass** eine erste Umfangsposition der Messung des Versatzmasses (28) in einer oberen Position, vorzugsweise in einem Winkelbereich von +/- 30° um die 12 Uhr Position gewählt ist, und eine zweite Umfangsposition der Messung des Versatzmasses (28) in einer unteren Position, vorzugsweise in einem Winkelbereich von +/- 30° um die 6 Uhr Position gewählt ist.

3. Verfahren nach einem der vorhergehenden Ansprüche, **dadurch gekennzeichnet, dass** die beiden unterschiedlichen Umfangspositionen im wesentlichen gegenüberliegend, vorzugsweise genau gegenüberliegend um den Umfang des Rotors (2) betrachtet angeordnet sind.

4. Verfahren nach einem der vorhergehenden Ansprüche, **dadurch gekennzeichnet, dass** wenigstens drei oder vier unterschiedliche Umfangspositionen für die Messung der Versatzmasse (28) eingesetzt werden.

5. Verfahren nach einem der vorhergehenden Ansprüche, **dadurch gekennzeichnet, dass** die Lagerschale (1) in einem Hohlraum (5) eines Lagergehäuses (3) angeordnet ist, und dass die Messung durch an unterschiedlichen Umfangspositionen vorgesehene Bohrungen (17, 18) in einer radialen, dem freien Ende (38) des Rotors zugewandten Wandung (9) des Lagergehäuses (3) vorgenommen wird.

6. Verfahren nach einem der vorhergehenden Ansprüche, **dadurch gekennzeichnet, dass** die Messung des Versatzmasses (28) unter Verwendung einer stabförmigen Vorrichtung erfolgt, welche wenigstens über ein erstes Element (25, 32) verfügt, welches in axialen Anschlag mit der Versatzfläche (22) gebracht wird, sowie wenigstens über ein zweites Element (26, 34), welches bezüglich des ersten Elementes (25, 32) verschieblich gelagert ist, und welches in axialen Anschlag mit der radialen Abschlussfläche (21) gebracht wird, wobei das Versatzmass (28) über den Versatz des ersten Elementes (25, 32) zum zweiten Element (26, 34) ermittelt wird.

7. Verfahren nach Anspruch 6, **dadurch gekennzeichnet, dass** die Lagerschale (1) in einem Hohlraum (5) eines Lagergehäuses (3) angeordnet ist, und dass die Messung durch an unterschiedlichen Umfangspositionen vorgesehene Bohrungen (17, 18) in einer radialen, dem freien Ende (38) des Rotors zugewandten Wandung (9) vorgenommen wird, indem die das erste Element (25, 32) und das zweite Element (26, 34) mit jeweils einem ersten Ende in axialer Richtung jeweils in eine Bohrung (17, 18) eingeführt wird, das erste Element (25,32) in Anschlag mit der Versatzfläche (22) gebracht wird und das zweite Element (26, 34) in Anschlag mit der radialen Abschlussfläche (21) gebracht wird, gegebenenfalls die Relativposition des ersten Elementes (25, 32) zum zweiten Element (26, 34) fixiert wird, und diese Relativposition als Maß für das Versatzmass verwendet wird.

8. Verfahren nach einem der vorhergehenden Ansprüche, **dadurch gekennzeichnet, dass** die Messung des Versatzmasses (28) hinsichtlich radialer Abschlussfläche (21) bei einer radialen Position weniger als 10 mm, vorzugsweise weniger als 5 mm radial außerhalb einer Umfangsfläche (15) des Rotors (20) im Lagerbereich erfolgt.

9. Verfahren nach einem der vorhergehenden Ansprüche, **dadurch gekennzeichnet, dass** die Messung eines Versatzmasses (28) durch eine axiale Wellenmessbohrung in der Umfangswandung (3) erfolgt.

10. Gasturbine oder Dampfturbine zur Durchführung eines Verfahrens nach einem der vorhergehenden Ansprüche, **dadurch gekennzeichnet, dass** die Turbine einen in wenigstens einer Lagerschale (1) gelagerten Rotor (2) aufweist, wobei die Lagerschale (1) in einem Hohlraum (5) eines Lagergehäuses (3) angeordnet ist, der Rotor (2) mit einem radialen Versatz und einer radialen Versatzfläche (22) und die den Rotor (2) lagernde Lagerschale (1) mit einer wenigstens bereichsweise radialen Abschlussfläche (21) angeordnet ist, wobei die radiale Versatzfläche (22) und die radiale Abschlussfläche (21) dem freien Ende des Rotors (2) zugewandt sind und wobei der radiale Versatz bei der Lagerschale (1) und zum freien Ende (38) des Rotors (2) hin versetzt angeordnet ist, und wobei an unterschiedlichen Umfangspositionen zu öffnende Durchgangsbohrungen (17, 18) für die Messung in einer radialen, dem freien Ende (38) des Rotors zugewandten Wandung (9) des Lagergehäuses (3) vorgesehen sind.

## Claims

1. Method for checking the bearing alignment of a rotor (2) of a gas turbine or steam turbine, **characterised in that**
in a rotor (2) with a radial offset and a radial offset face (22), and
with a bearing shell (1) supporting the rotor (2) and having a terminal face (21) which is radial at least in regions,
wherein the radial offset face (22) and the radial terminal face (21) are turned towards the free end of the rotor (2), and
wherein the radial offset is arranged at the bearing shell (1) and offset towards the free end (38) of the rotor (2),
the offset dimension (28) relative to the rotor (2) in the axial direction between the radial offset face (22) and the radial terminal face is measured at least at two different circumferential positions about the rotor periphery in order to determine the alignment of the rotor (2) relative to the bearing shell (1),
wherein differences in the offset dimension (28) at different circumferential positions are used as a measure of the bearing alignment.

2. Method according to claim 1, **characterised in that** a first circumferential position of
the measurement of the offset dimension (28) is selected in an upper position, preferably in an angular range of ± 30° about the 12 o'clock position, and a second circumferential position of the measurement of the offset dimension (28) is selected in a lower position, preferably in an angular range of ± 30° about the 6 o'clock position.

3. Method according to any of the preceding claims, **characterised in that** the two different circumferential positions are arranged substantially opposite, preferably precisely opposite, viewed around the periphery of the rotor (2).

4. Method according to any of the preceding claims, **characterised in that** at least three or four different circumferential positions are used for measuring the offset dimension (28).

5. Method according to any of the preceding claims, **characterised in that** the bearing shell (1) is arranged in a cavity (5) of a bearing housing (3), and the measurement is performed through bores (17, 18) provided at different circumferential positions in a radial wall (9) of the bearing housing (3) facing the free end (38) of the rotor.

6. Method according to any of the preceding claims, **characterised in that** the offset dimension (28) is measured using a rod-like device which has at least a first element (25, 32) which is brought to an axial stop on the offset face (22), and at least a second element (26, 34) which is mounted displaceably relative to the first element (25, 32) and which is brought to an axial stop on the radial terminal face (21), wherein the offset dimension (28) is determined via the offset of the first element (25, 32) to the second element (26, 34).

7. Method according to claim 6, **characterised in that** the bearing shell (1) is arranged in a cavity (5) of a bearing housing (3), and the measurement is performed through bores (17, 18) provided at different circumferential positions in a radial wall (9) facing the free end (38) of the rotor, **in that** the first element (25, 32) and the second element (26, 34) are each introduced with a first end in the axial direction into a respective bore (17, 18), the first element (25, 32) is brought to a stop on the offset face (22) and the second element (26, 34) is brought to a stop on the radial terminal face (21), where applicable the relative position of the first element (25, 32) to the second element (26, 34) is determined and this relative position is used as a measure of the offset dimension.

8. Method according to any of the preceding claims, **characterised in that** the offset dimension (28) relative to the radial terminal face (21) is measured at a radial position of less than 10 mm, preferably less than 5 mm radially outside a peripheral face (15) of the rotor (20) in the bearing area.

9. Method according to any of the preceding claims, **characterised in that** an offset dimension (28) is measured through an axial shaft measuring bore in the peripheral wall (3).

10. Gas turbine or steam turbine for performance of a method according to any of the preceding claims, **characterised in that** the turbine has a rotor (2) mounted in at least one bearing shell (1), wherein the bearing shell (1) is arranged in a cavity (5) of a bearing housing (3), the rotor is arranged with a radial offset and a radial offset face (22), and the bearing shell (1) supporting the rotor (2) has a terminal face (21) which is radial at least in regions, wherein the radial offset face (22) and the radial terminal face (21) are turned towards the free end of the rotor (2), and wherein the radial offset is arranged at the bearing shell (1) and offset towards the free end (38) of the rotor (2), and wherein passage bores (17, 18) to be opened at different circumferential positions for measurement are provided in a radial wall (9) of the bearing housing (3) facing the free end (38) of the rotor.

## Revendications

1. Procédé de contrôle de l'orientation du palier d'un rotor (2) d'une turbine à gaz ou d'une turbine à vapeur, **caractérisé en ce que**
pour un rotor (2) avec un décalage radial et une surface de décalage radial (22) et
pour une coque de palier (1) logeant le rotor (2) avec une surface terminale (21) au moins partiellement radiale (21),
la surface de décalage radiale (22) et la surface terminal radiale (21) étant orientées vers l'extrémité libre du rotor (2) et
le décalage radial étant disposé au niveau de la coque de palier (1) et décalé en direction de l'extrémité libre (38) du rotor (2),
le degré de décalage (28) est adapté, dans la direction entre la surface de décalage radiale (22) et la surface terminal radiale (21) par rapport au rotor (2), au niveau d'au moins deux positions circonférentielles différentes sur la circonférence du rotor, afin de déterminer l'orientation du rotor (2) par rapport à la coque de palier (1), des différences de degré de décalage (28) au niveau de différentes positions circonférentielles étant utilisées en tant que mesure pour l'orientation du palier.

2. Procédé selon la revendication 1, **caractérisé en ce qu'**une première position circonférentielle de la mesure du degré de décalage (28) est choisie dans une position supérieure, de préférence dans une zone angulaire de ± 30° autour de la position 12 heures, et une deuxième position circonférentielle de la mesure du degré de décalage (28) est choisie dans une position inférieure, de préférence dans une zone angulaire de ± 30° autour de la position 6 heures.

3. Procédé selon l'une des revendications précédentes, **caractérisé en ce que** les deux positions circonférentielles différentes sont disposées de manière globalement opposée, de préférence de manière exactement opposée autour de la circonférence du rotor (2).

4. Procédé selon l'une des revendications précédentes, **caractérisé en ce qu'**au moins trois ou quatre positions circonférentielles différentes sont utilisées pour la mesure de degrés de décalage (28).

5. Procédé selon l'une des revendications précédentes, **caractérisé en ce que** la coque de palier (1) est disposée dans une cavité (5) d'un boîtier de palier (3) et **en ce que** la mesure est effectuée à l'aide d'alésages (17, 18) prévus au niveau de différentes positions circonférentielles dans une paroi (9) du boîtier de palier (3), orientée vers l'extrémité libre (38) du rotor.

6. Procédé selon l'une des revendications précédentes, **caractérisé en ce que** la mesure du degré de décalage (28) a lieu à l'aide d'un dispositif en forme de barre, qui comprend au moins un premier élément (25, 32), qui est amené en butée axiale avec la surface de décalage (22), ainsi qu'au moins un deuxième élément (26, 34), qui est logé de manière coulissante par rapport au premier élément (25, 32) et qui est amené en butée axiale avec la surface terminale radiale (21), le degré de décalage (28) étant déterminé par l'intermédiaire du décalage du premier élément (25, 32) par rapport au deuxième élément (26, 34).

7. Procédé selon la revendication 6, **caractérisé en ce que** la coque de palier (1) est disposée dans une cavité (5) d'un boîtier de palier (3) et **en ce que** la mesure est effectuée à l'aide d'alésages (17, 18) prévus au niveau de différentes positions circonférentielles dans une paroi (9) orientée vers l'extrémité libre (38) du rotor et le deuxième élément (26, 34) est inséré avec une première extrémité dans la direction axiale dans un alésage (17, 18), le premier élément (25, 32) est amené en butée avec la surface de décalage (22) et le deuxième élément (26, 34) est amené en butée avec la surface terminale radiale (21), le cas échéant la position relative du premier élément (25, 32) par rapport au deuxième élément (26, 34) est fixée et cette position relative est utilisée comme mesure du degré de décalage.

8. Procédé selon l'une des revendications précédentes, **caractérisé en ce que** la mesure du degré de décalage (28) a lieu, en ce qui concerne la surface terminale radiale (21), à une position radiale inférieure à 10 mm, de préférence inférieure à 5 mm radialement à l'extérieur d'une surface circonférentielle (15) du rotor (20) dans la zone du palier.

9. Procédé selon l'une des revendications précédentes, **caractérisé en ce que** la mesure d'un degré de décalage (28) a lieu à l'aide d'un alésage de mesure d'arbre axial dans la paroi circonférentielle (3).

10. Turbine à gaz ou turbine à vapeur pour l'exécution d'un procédé selon l'une des revendications précédentes, **caractérisé en ce que** la turbine comprend un rotor (2) logé dans au moins une coque de palier (1), la coque de palier (1) étant disposée dans une cavité (5) d'un boîtier de palier (3), le rotor (2) étant disposé avec un décalage radial et une surface de décalage radial (22) et la coque de palier (1) logeant le rotor (2) étant disposée avec une surface terminale (21) au moins partiellement radiale, la surface de décalage radial (22) et la surface terminale radiale (21) étant orientées vers l'extrémité libre du rotor (2) et le décalage radial étant disposé au niveau de la coque de palier (1) et de manière décalée par rapport à l'extrémité libre (38) du rotor (2) et, au niveau de différentes positions circonférentielles, des alésages de passage (17, 18) à ouvrir sont prévus pour la mesure dans une paroi (9) du boîtier de palier (3) orientée vers l'extrémité libre (38) du rotor.
